# EUROPEAN PATENT APPLICATION

(11) **EP 4 647 206 A1**
(43) Date of publication of application: **12.11.2025**
(21) Application number: 24888939.6
(22) Date of filing: 02.10.2024
(51) Int. Cl.: B23K 31/12, B23K 26/03, B23K 26/21, B23K 37/00

(54) **WELDING APPARATUS HAVING NON-DESTRUCTIVE THERMAL ANALYSIS FUNCTION**

(30) Priority: 08.11.2023 KR 20230153722
(71) Applicant: Derkwoo Electronics Co., Ltd., Gumi-si, Gyeongsangbuk-do 39167 (KR)
(72) Inventor: KIM, Ki-Bum, Seongnam-si, Gyeonggi-do 13505 (KR); LEE, Jinseong, Uiwang-si, Gyeonggi-do 16036 (KR); CHOI, Seok-Won, Hwaseong-si, Gyeonggi-do 18480 (KR); CHANG, Hun, Incheon 21310 (KR); KIM, Jong-Hee, Seoul 05799 (KR)
(74) Representative: Isarpatent
(86) International application number: PCT/KR2024/014994
(87) International publication number: WO 2025/100744

(57) **Abstract**

A welding apparatus having a non-destructive thermal analysis function according to an embodiment of the present invention is capable of predicting penetration depth and mechanical properties of a welding portion of a welding target. The welding apparatus having a non-destructive thermal analysis function includes: a seating unit on which a welding target is seated; a laser welding unit which is arranged to be spaced apart from the upper portion of the seating unit and irradiates a laser for welding the welding target to a welding portion of the welding target; a first temperature measurement unit which is spaced apart from the lower portion of the seating unit and measures a first temperature of an area that corresponds to the welding portion and is on the bottom surface of the welding target; and a control unit which detects a welding defect of the welding target on the basis of the first temperature measured by the first temperature measurement unit.

## Description

### Technical Field

The present disclosure relates to a welding apparatus, and more particularly, to a welding apparatus having a non-destructive thermal analysis function.

### BACKGROUND ART

In the related art, weldability of a weld portion has been checked by performing destructive tests such as hardness measurement or a tensile test as a method of determining mechanical properties of the welding portion.

Although nondestructive testing methods such as radiographic testing, ultrasonic testing, or magnetic particle testing are also being utilized in a welding field, such nondestructive testing methods have been used for detecting welding defects, rather than determining mechanical properties of a welding portion such as a welding strength.

Meanwhile, a most important factor in determining mechanical properties (strength) of a welding portion is generally known as a penetration depth, and it has also been checked that a penetration depth is most important in determining a strength of a welding portion in partial penetration.

Destructive testing such as cross-sectional inspection is ultimately required to check the penetration depth. However, the destructive testing has problems in that a full inspection cannot be performed and inspection time is too long.

### DISCLOSURE OF INVENTION

### TECHNICAL PROBLEM

Therefore, the present disclosure has been made in view of the above problems, and it is an object of the present disclosure to provide a welding apparatus having a thermal analysis function as described below.

An object of the present disclosure is to provide a welding apparatus capable of estimating mechanical properties of a welding portion, instead of destructive or non-destructive inspection in the related art, by deriving a correlation between a temperature and a penetration depth during laser welding in a welding area, and then, converting the temperature into the penetration depth using the correlation.

The problems to be solved in the present disclosure are not limited to those described above, and other problems to be solved may be clearly understood by those skilled in this art based on the following description.

### TECHNICAL SOLUTION

A welding apparatus having a non-destructive thermal analysis function according to an embodiment of the present disclosure is capable of predicting a penetration depth and mechanical properties of a welding portion of a welding target. The welding apparatus having a non-destructive thermal analysis function includes: a seating unit on which a welding target is seated; a laser welding unit arranged over the seating unit to be apart therefrom and configured to irradiate a welding portion of the welding target with a laser for welding the welding target; a first temperature measurement unit arranged below the seating unit to be apart therefrom and configured to measure a first temperature of an area that corresponds to the welding portion and is on a bottom surface of the welding target; and a control unit configured to detect a welding defect of the welding target based on the first temperature measured by the first temperature measurement unit.

The control unit may desirably include: an input part configured to acquire the first temperature measured by the first temperature measurement unit; a storage part configured to store a reference temperature range for normal welding based on a correlation between temperatures and penetration depths; a comparison part configured to check whether the first temperature acquired by the input part is within the reference temperature range; and a determination part configured to determine whether a welding defect is present in the welding target based on a result of comparison by the comparison part.

When the comparison part checks that the first temperature is lower than a lower limit of the reference temperature range, the determination part may desirably determine a welding state of the welding target as a weak welding state.

The correlation between the temperatures and the penetration depths is determined by a deep learning algorithm generated by machine learning.

* Desirably, the seating unit may be fixedly arranged, and the laser welding unit and the first temperature measurement unit may move horizontally along a preset welding path.

Desirably, the laser welding unit and the first temperature measurement unit may be fixedly arranged, and the seating unit may move horizontally along a preset welding path.

Desirably, a plurality of first temperature measurement units may be arranged along the welding path, and the seating unit and the first temperature measurement unit may be fixedly arranged, and the laser welding unit may move horizontally along a preset welding path.

Desirably, an optical filter may be placed over the first temperature measurement unit, and configured to block light of a wavelength corresponding to a spectrum of a laser beam radiated from the laser welding unit.

The first temperature measurement unit may be desirably configured as a thermal imaging camera or an infrared sensor.

The control unit may desirably further include an output control part configured to control laser output of the laser welding unit.

When a result such that the determination part determines a welding state of the welding target as a weak welding state has occurred consecutively for a preset number of times or more, the output control part may desirably increase laser output of the laser welding unit.

A welding apparatus having a non-destructive thermal analysis function according to another embodiment of the present disclosure is configured to be capable of predicting a penetration depth and mechanical properties of a welding portion of a welding target and having a function of protecting a temperature measurement unit and a non-destructive thermal analysis function. The welding apparatus includes: a seating unit on which a welding target is seated; a laser welding unit arranged over the seating unit to be apart therefrom and configured to irradiate a welding portion of the welding target with a laser for welding the welding target; a first temperature measurement unit arranged below the seating unit to be apart therefrom and configured to measure a first temperature of an area that corresponds to the welding portion and is on a bottom surface of the welding target; a second temperature measurement unit arranged over the seating unit to be apart therefrom to measure a second temperature of a welding portion on a top surface of the welding target; a first optical filter arranged over the first temperature measurement unit to block light of a wavelength corresponding to a spectrum of a laser beam radiated from the laser welding unit; and a control unit configured to detect a welding defect of the welding target based on the first temperature and the second temperature measured by the first temperature measurement unit and the second temperature measurement unit, respectively.

The control unit may desirably include an input part configured to acquire the first temperature and the second temperature transmitted by the first temperature measurement unit and the second temperature measurement unit, respectively; a storage part configured to store a reference temperature for normal welding based on a correlation between temperatures and penetration depths; a comparison part configured to compare the first temperature and the second temperature each acquired by the input part, respectively, to the reference temperature; and the determination part configured to determine whether a welding defect is present in the welding target 10 based on a result of the comparison by the comparison part.

When the comparison part checks that the first temperature is lower than the reference temperature and the second temperature is higher than the reference temperature, the determination part may desirably determine a welding state of the welding target as a weak welding state.

The correlation between the temperatures and the penetration depths may be determined by a deep learning algorithm generated by machine learning.

Desirably, the seating unit may be fixedly arranged, and the laser welding unit, the first temperature measurement unit, and the second temperature measurement unit may move horizontally along a preset welding path.

Desirably, the laser welding unit, the first temperature measurement unit, and the second temperature measurement unit may be fixedly arranged, and the seating unit may move horizontally along a preset welding path.

Desirably, a plurality of first temperature measurement units may be arranged along the welding path, the seating unit and the first temperature measurement unit may be fixedly arranged, and the laser welding unit and the second temperature measurement unit may move horizontally along a preset welding path.

A second optical filter arranged below the second temperature measurement unit to block light of a wavelength corresponding to a spectrum of a laser beam radiated from the laser welding unit may be desirably further included.

The first temperature measurement unit and the second temperature measurement unit may be desirably a thermal imaging camera or an infrared sensor.

The control unit may desirably further include an output control part configured to control laser output of the laser welding unit.

When a result such that the determination part determines a welding state of the welding target as a weak welding state has occurred consecutively for a preset number of times or more, the output control part may desirably increase laser output of the laser welding unit.

### ADVANTAGEOUS EFFECTS

A welding apparatus having a non-destructive thermal analysis function according to the present disclosure is configured to acquire a temperature of a corresponding welding portion during a process of welding, by a laser welding unit, a welding target, and estimate mechanical properties of the corresponding welding portion, such as a penetration depth, based on a correlation between a temperature and a penetration depth which are checked in advance. Thus, an effect of remarkably reducing inspection time while enabling full inspection of a welding state may be expected.

Effects of the present disclosure are not limited to those described above, and other effects may be clearly understood by those skilled in this art based on the following description.

### BRIEF DESCRIPTION OF THE DRAWINGS

FIG. 1 is a conceptual diagram schematically illustrating an example of a welding apparatus having a non-destructive thermal analysis function according to an embodiment of the present disclosure.
FIG. 2 is a block diagram illustrating a detailed configuration of a control unit of FIG. 1.
FIG. 3 is a graph showing a temperature distribution and penetration depths of a welding area when welding is performed by varying laser power.
FIG. 4 is a graph showing a correlation between temperatures and penetration depths using data of FIG. 3.
FIGS. 5 to 7 are diagrams for explaining various implementation examples of a temperature measurement method by the welding apparatus having a non-destructive thermal analysis function according to an embodiment of the present disclosure.
FIG. 8 is a diagram for explaining an implementation example in which an optical filter is applied to the welding apparatus having a non-destructive thermal analysis function according to an embodiment of the present disclosure.
FIG. 9 is a conceptual diagram of a welding apparatus having a non-destructive thermal analysis function according to another embodiment of the present disclosure.
FIG. 10 is a block diagram illustrating a detailed configuration of a control unit of FIG. 9.
FIGS. 11 to 14 are diagrams for explaining a method of determining whether a welding defect is present by measuring rear and front surface portions of a welding target.
FIG. 15 is a diagram for explaining an implementation example in which an optical filter is applied to the welding apparatus having a non-destructive thermal analysis function according to another embodiment of the present disclosure.

### BEST MODE FOR CARRYING OUT THE INVENTION

A description will now be given in detail according to embodiments disclosed herein, with reference to the accompanying drawings. For the sake of a brief description with reference to the drawings, the same or equivalent components may be provided with the same reference numbers, and the description thereof will not be repeated.

In addition, while describing the present disclosure, when it is determined that a detailed description of well-known typical art may make the points of the present disclosure unclear, the detailed description will be omitted. In addition, the accompanying drawings are used to help easily understand the technical idea of the present disclosure and it should be understood that the idea of the present disclosure is not limited by the accompanying drawings.

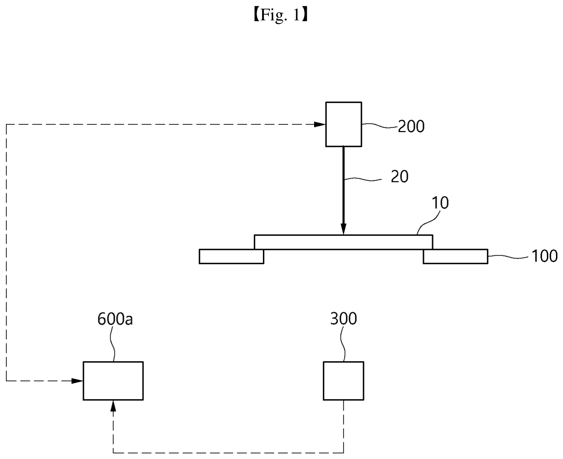

Hereinafter, a welding apparatus having a non-destructive thermal analysis function according to an embodiment of the present disclosure will be described with reference to FIGS. 1 to 8.

The welding apparatus having a non-destructive thermal analysis function according to an embodiment of the present disclosure relates to a welding apparatus having a non-destructive thermal analysis function capable of predicting a penetration depth and mechanical properties of a welded portion of a welding target 10, and is configured to include a seating unit 100, a laser welding unit 200, a first temperature measurement unit 300, and a control unit 600a as illustrated in FIG. 1.

The seating unit 100 is configured to perform a function of fixedly seating the welding target 10, and the laser welding unit 200 is arranged over the seating unit 100 to be apart therefrom and performs a function of irradiating a welding portion of the welding target 10 with a laser for welding the welding target 10.

The first temperature measurement unit 300 is arranged below the seating unit 100 to be apart therefrom, and configured to be perform a function of measuring a first temperature of an area that corresponds to the welding portion and is on a bottom surface of the welding target 10. The first temperature measurement unit 300 may be configured as a thermal imaging camera or an infrared sensor.

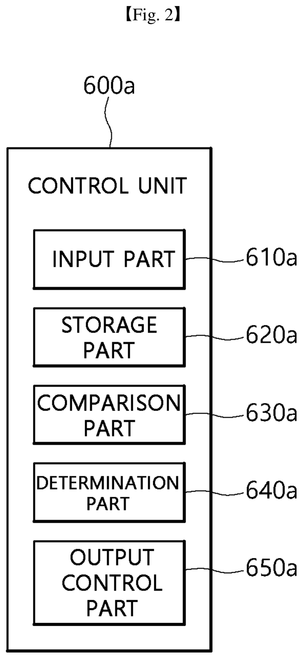

The control unit 600a performs a function of detecting a welding defect of the welding target 10 based on the first temperature measured by the first temperature measurement unit 300, and may be configured to include an input part 610a, a storage part 620a, a comparison part 630a, and a determination part 640a, as illustrated in detail in FIG. 2.

The input part 610a performs a function of acquiring the first temperature measured by the first temperature measurement unit 300. The storage part 620a stores a reference temperature range for normal welding based on a correlation between temperatures and penetration depths.

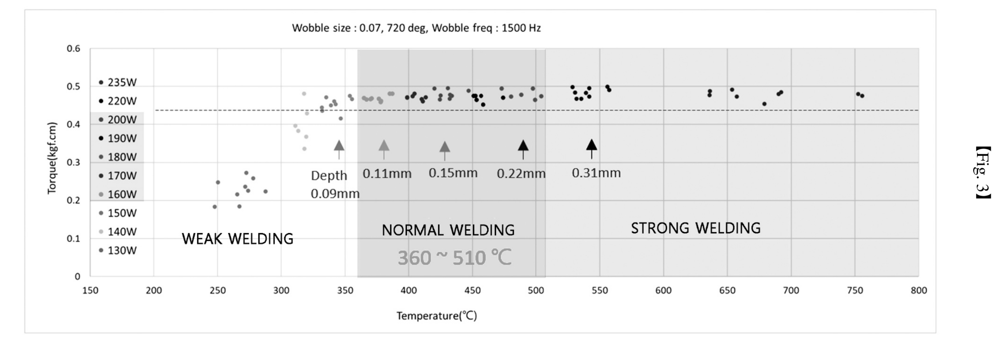

Here, to derive the correlation between temperatures and penetration depths, welding is performed for multiple times by varying laser powers to acquire a temperature during a corresponding welding process, as shown in FIG. 3.

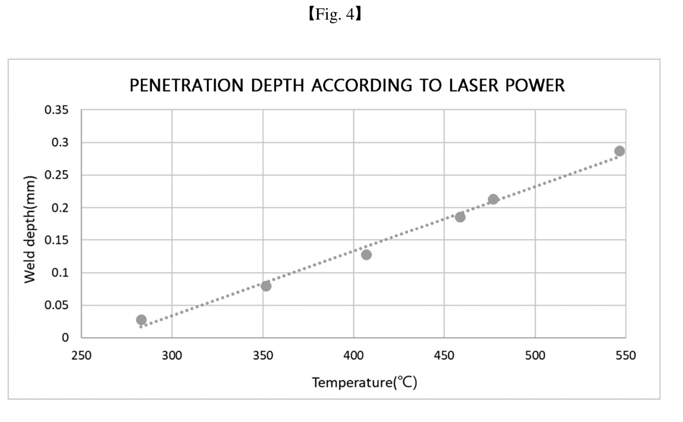

In addition, a torque and a penetration depth for each welding result are checked. Based on this, penetration depth information and a reference temperature range for normal welding are selected as shown in FIG. 3. Then, the correlation between temperatures and penetration depths may be derived as shown in FIG. 4.

Meanwhile, unlike FIG. 3, with respect to each welding result, a tensile strength and a penetration depth may be checked, or a hardness and a penetration depth may be checked. By doing so, penetration depth information and a reference temperature range for normal welding may be selected, and based on this, a correlation between temperatures and penetration depths may be ultimately derived.

The correlation between temperatures and penetration depths may be generated based on a result of multiple experiments, as shown in FIG. 3. However, when big data on a result of a corresponding experiment may be secured, it may be desirable to derive the correlation between temperatures and penetration depths using a deep learning algorithm generated by machine learning.

The welding apparatus having a non-destructive thermal analysis function according to the present disclosure is configured to derive a correlation between temperatures and penetration depths as described above. Thus, a destructive inspection such as a cross-sectional inspection does not need to be performed to check a penetration depth, which is a mechanical property of welding. In addition, a full inspection of welding defects may be performed by converting a penetration depth using a temperature measured at a welding portion, and inspection time may also be remarkably reduced.

The comparison part 630a is configured to check whether the first temperature acquired by the input part 610a is within a reference temperature range set by the storage part 620a. The determination part 640a is configured to determine whether a welding defect is present in the welding target 10 based on a result of comparison by the comparison part 630a.

That is, when the comparison part 630a checks that the first temperature measured by the first temperature measurement unit 300 is lower than a lower limit of the reference temperature range set by the storage part 620a, the determination part 640a determines a welding state of the welding target 10 as a weak welding state.

Conversely, when the comparison part 630a checks that the first temperature measured by the first temperature measurement unit 300 exceeds an upper limit of the reference temperature range set by the storage part 620a, the determination part 640a determines a welding state of the welding target 10 as a strong welding state.

For example, in such a case that the storage part 620a sets the reference temperature range for normal welding to 360 °C to 510 °C in consideration of a correlation between temperatures and penetration depths, when the first temperature measured by the first temperature measurement unit 300 is 200 °C which is lower than 360 °C, the determination part 640a determines that the welding target 10 is currently in a weak welding state in which a penetration depth is insufficient.

Conversely, when the first temperature measured by the first temperature measurement unit 300 is 550 °C, the determination part 640a determines that the welding target 10 is in a strong welding state in which a penetration depth is too deep.

In addition, as illustrated in FIG. 2, the control unit 600a may further include an output control part 650a. The output control part 650a performs a function of controlling laser output of the laser welding unit 200.

In detail, the welding apparatus having a non-destructive thermal analysis function according to the present disclosure consecutively performs welding on the welding target 10. At this time, when a result such that the determination part 640a of the control unit 600a determines a welding state of the welding target 10 as a weak welding state has occurred consecutively for a preset number of times or more, the output control part 650a may increase laser output of the laser welding unit 200.

Conversely, when a result such that the determination part 640a of the control unit 600a determines a welding state of the welding target 10 as a strong welding state has occurred consecutively for a preset number of times or more, the output control part 650a may reduce laser output of the laser welding unit 200.

Meanwhile, the welding apparatus having a non-destructive thermal analysis function according to an embodiment of the present disclosure consecutively performs welding on the welding target 10 along a preset welding path. At this time, in relation to a method of acquiring the first temperature by the first temperature measurement unit 300, various implementation examples may be taken into account.

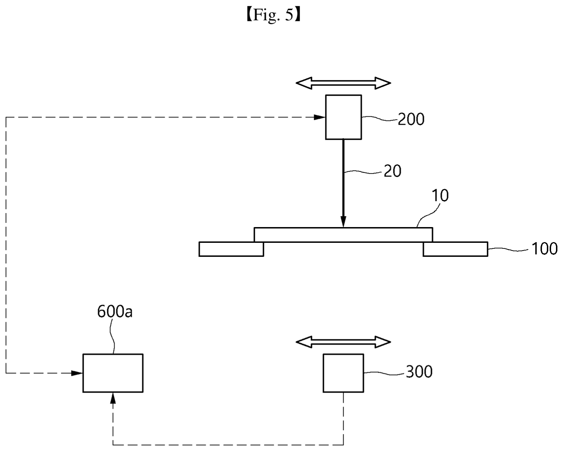

First, as shown in FIG. 5, there is a method such that the seating unit 100, in a state of being fixedly arranged, simultaneously moves the laser welding unit 200 and the first temperature measurement unit 300 horizontally along a preset welding path.

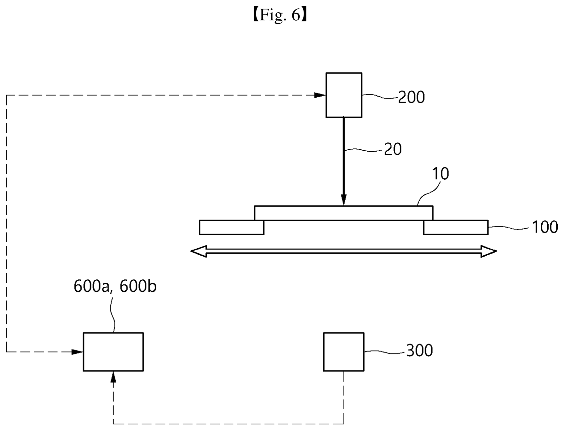

Secondly, as shown in FIG. 6, there is a method such that the laser welding unit 200 and the first temperature measurement unit 300 are fixedly arranged, and only the seating unit 100, i.e., the welding target 10, is moved horizontally along a preset welding path.

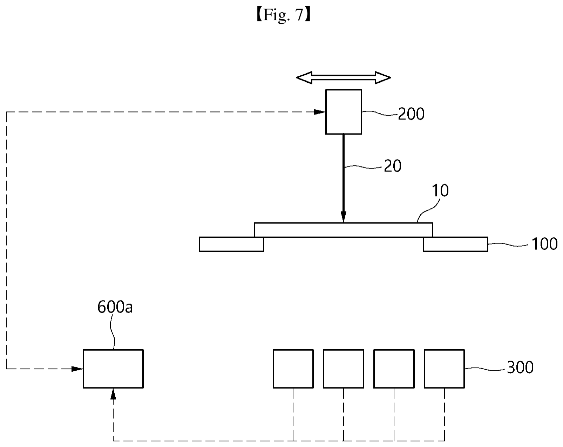

Lastly, as shown in FIG. 7, there is a method such that a plurality of first temperature measurement units 300 are arranged along a welding path, and while the seating unit 100 and the plurality of first temperature measurement units 300 are fixed, only the laser welding unit 200 is moved horizontally along a preset welding path.

Meanwhile, as described above, the laser welding unit 200 is arranged over the welding target 10 to be apart therefrom, the first temperature measurement unit 300 is arranged below the welding target 10 to be apart therefrom, and the laser welding unit 200 irradiates the welding target 10 positioned therebelow with a laser 20, and at this time, the first temperature measurement unit 300 is configured to measure the first temperature of an area to be welded, the area being on a bottom surface of the welding target 10.

In the process described above, when the welding target 10 is penetrated through by the laser 20, or when the laser 20 is radiated from the laser welding unit 200 while the welding target 10 is not seated on the seating unit 100, the laser 20 is ultimately radiated directly to the first temperature measurement unit 300. Thus, the first temperature measurement unit 300 may be damaged by the laser 20.

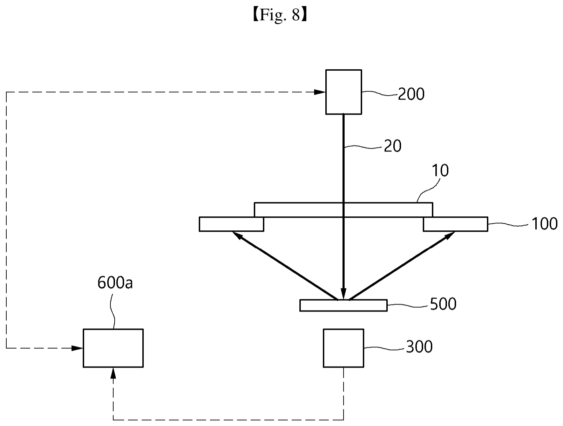

To prevent such problems, the welding apparatus having a non-destructive thermal analysis function according to an embodiment of the present disclosure may be configured to further include an optical filter 500 as illustrated in FIG. 8.

The optical filter 500 is configured to be placed over the first temperature measurement unit 300, and may be desirably configured to block light of a wavelength corresponding to a spectrum of a laser beam radiated from the laser welding unit 200.

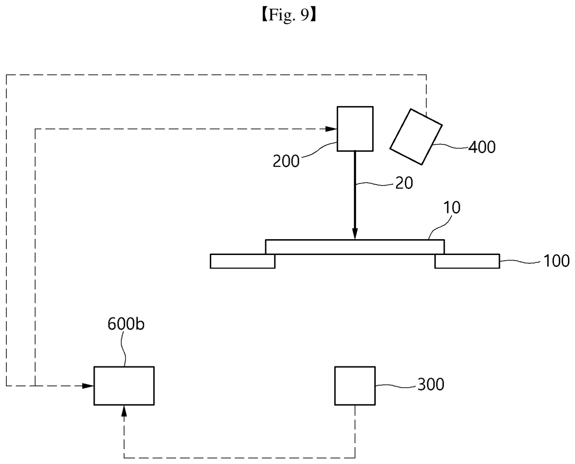

Hereinafter, referring to FIGS. 9 to 15, a welding apparatus having a non-destructive thermal analysis function according to another embodiment of the present disclosure will be described. A description that is identical to the aforementioned description about the welding apparatus having a non-destructive thermal analysis function according to an embodiment of the present disclosure will not be provided in detail here again.

The welding apparatus having a non-destructive thermal analysis function according to another embodiment of the present disclosure relates to a welding apparatus configured to predict a penetration depth and mechanical properties of a welded portion of the welding target 10 and having a function of protecting a temperature measurement unit and a non-destructive thermal analysis function, and as shown in FIG. 9, is configured to include the seating unit 100, the laser welding unit 200, the first temperature measurement unit 300, a second temperature measurement unit 400, and the control unit 600b.

The seating unit 100 is configured to perform a function of fixedly seating the welding target 10, and the laser welding unit 200 is arranged over the seating unit 100 to be apart therefrom to perform a function of irradiating a welding portion of the welding target 10 with a laser for welding the welding target 10.

The first temperature measurement unit 300 is configured to be arranged below the seating unit 100 to be apart therefrom to perform a function of measuring a first temperature of an area that corresponds to the welding portion and is on a bottom surface of the welding target. The second temperature measurement unit 400 is arranged over the seating unit 100 to be apart therefrom to perform a function of measuring a second temperature of a welding portion on a top surface of the welding target 10.

In particular, the first temperature measurement unit 300 and the second temperature measurement unit 400 may be configured as a thermal imaging camera or an infrared sensor.

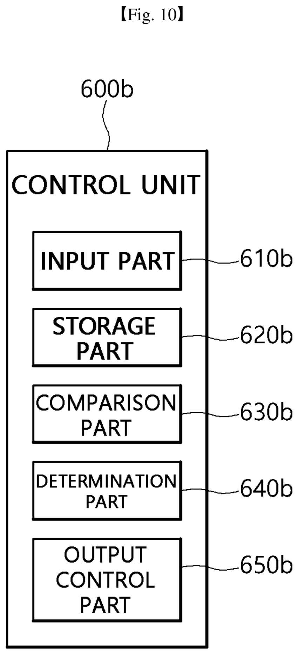

The control unit 600b performs a function of detecting a welding defect of the welding target 10 based on the first temperature measured by the first temperature measurement unit 300 and the second temperature measured by the second temperature measurement unit 400, and may be configured to include an input part 610b, a storage part 620b, a comparison part 630b, and a determination part 640b, as illustrated in detail in FIG. 10.

The input part 610b performs a function of acquiring the first temperature measured by the first temperature measurement unit 300 and the second temperature measured by the second temperature measurement unit 400, respectively, and the storage part 620b stores a reference temperature for normal welding based on a correlation between temperatures and penetration depths. A description of derivation of a correlation between temperatures and penetration depths is identical to the description about the welding apparatus having a non-destructive thermal analysis function according to an embodiment of the present disclosure. Thus, the description thereof will not be provided here again.

The comparison part 630b is configured to compare the first temperature and the second temperature each acquired by the input part 610b, respectively, to a reference temperature set by the storage part 620b. The determination part 640b is configured to determine whether a welding defect is present in the welding target 10 based on a result of the comparison by the comparison part 630b.

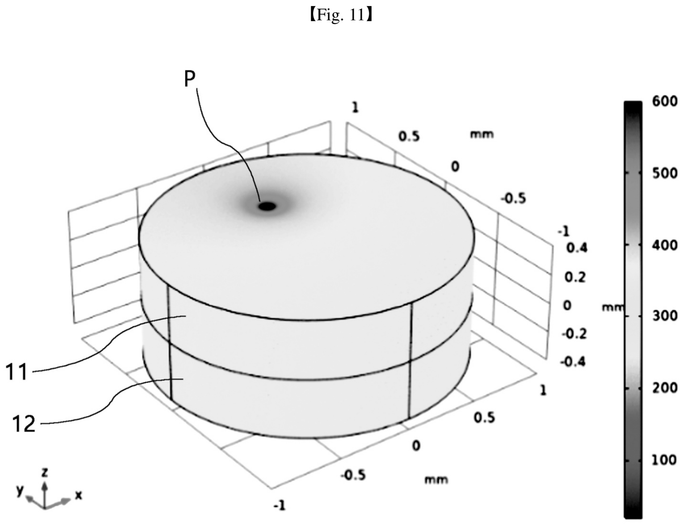

Before a method of the determination by the determination part 640b is described, average temperatures of rear and front surfaces of the welding target 10 in a full contact model and a partial contact model will be explained with reference to FIGS. 11 to 14.

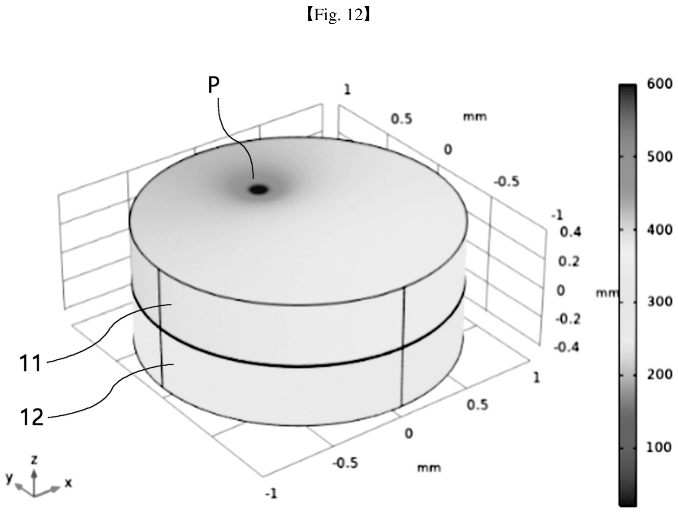

FIG. 11 shows a model indicating a full contact state between two welding targets 11 and 12 due to welding at a welding portion P. FIG. 12 shows a model indicating a partial contact state, i.e., an insufficient penetration state between the two welding targets 11 and 12 due to welding at the welding portion P.

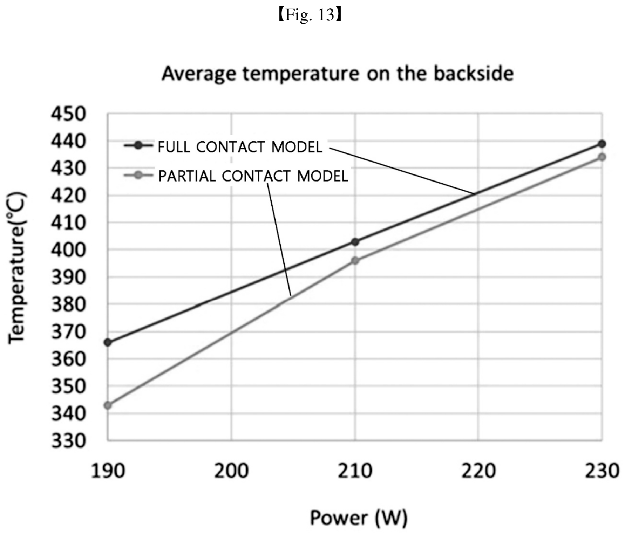

When average temperatures of the rear surface during welding in the full contact model and the partial contact model, i.e., temperatures measured by the first temperature measurement unit 300 are checked, it is checked that the temperature in the partial contact model is lower than the temperature in the full contact model as shown in FIG. 13.

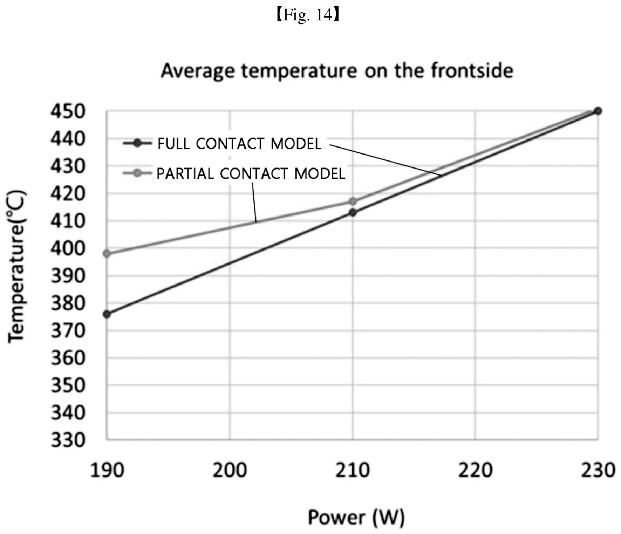

Conversely, when average temperatures of the front surface during welding in the full contact model and the partial contact model, i.e., temperatures measured by the second temperature measurement unit 400 are checked, it is checked that the temperature in the partial contact model is higher than the temperature in the full contact model as shown in FIG. 14.

By using such characteristics, when the determination part 640b is configured to determine a welding state of the welding target 10 as a weak welding state, when it is checked by the comparison part 630b that the first temperature is lower than a reference temperature and, simultaneously, the second temperature is higher than the reference temperature. Thus, presence of a welding defect may be accurately determined.

In addition, as illustrated in FIG. 10, the control unit 600b may further include an output control part 650b. The output control part 650b performs a function of controlling laser output of the laser welding unit 200.

In detail, the welding apparatus having a non-destructive thermal analysis function according to the present disclosure consecutively performs welding on the welding target 10. At this time, when a result such that the determination part 650b of the control unit 600b determines a welding state of the welding target 10 as a weak welding state or a strong welding state has occurred consecutively for a preset number of times or more, the output control part 650b may properly change laser output of the laser welding unit 200.

Meanwhile, the welding apparatus having a non-destructive thermal analysis function according to another embodiment of the present disclosure consecutively performs welding on the welding target 10 along a preset welding path. At this time, in relation to a method of consecutively acquiring the first temperature and the second temperature by the first temperature measurement unit 300 and the second temperature measurement unit 400, various implementation examples may be taken into account.

First, there is a method such that the seating unit 100 is fixedly arranged and the laser welding unit 200, and the first temperature measurement unit 300, and the second temperature measurement unit 400 move horizontally along a preset welding path.

Secondly, there is a method such that the laser welding unit 200, the first temperature measurement unit 300, and the second temperature measurement unit 400 are fixedly arranged, and only the seating unit 100, i.e., the welding target 10 is moved horizontally along a preset welding path.

Thirdly, there is a method such that a plurality of first temperature measurement units 300 are arranged along a welding path, and while the seating unit 100 and the plurality of first temperature measurement units 300 are fixed, only the laser welding unit 200 and the second temperature measurement unit 400 are moved horizontally along a preset welding path.

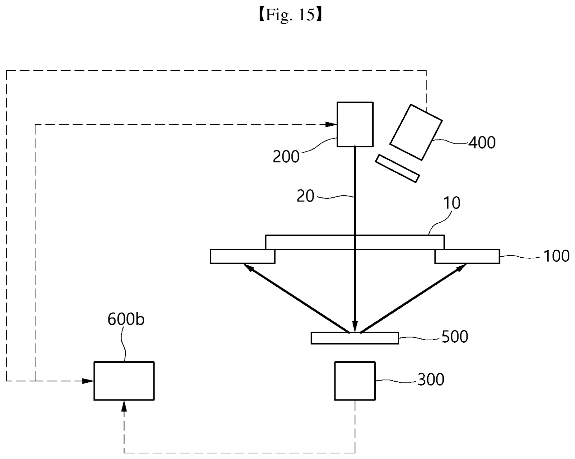

Meanwhile, the welding apparatus having a non-destructive thermal analysis function according to another embodiment of the present disclosure may include a first optical filter 510 and a second optical filter 520 as illustrated in FIG. 15 to protect the first temperature measurement unit 300 and the second temperature measurement unit 400.

In detail, the first optical filter 510 is arranged over the first temperature measurement unit 300 to perform a function of blocking light of a wavelength corresponding to a spectrum of a laser beam radiated from the laser welding unit 200, and the second optical filter 520 is arranged below the second temperature measurement unit 400 to perform a function of blocking light of a wavelength corresponding to a spectrum of a laser beam radiated from the laser welding unit 200.

By using the first optical filter 510 and the second optical filter 520, the first temperature measurement unit 300 and the second temperature measurement unit 400 may be prevented from being damaged by a laser.

While the present disclosure has been described in detail using embodiments, the scope of the present disclosure is not limited to particular embodiments, but should be interpreted in accordance with the appended claims. Additionally, it may be understood by one of ordinary skill in the art that various changes and modifications thereof may be made without departing from the scope of the present disclosure.

## Claims

1. A welding apparatus having a non-destructive thermal analysis function and capable of predicting a penetration depth and mechanical properties of a welding portion of a welding target, the welding apparatus comprising:
a seating unit on which a welding target is seated;
a laser welding unit arranged over the seating unit to be apart therefrom and configured to irradiate a welding portion of the welding target with a laser for welding the welding target;
a first temperature measurement unit arranged below the seating unit to be apart therefrom and configured to measure a first temperature of an area that corresponds to the welding portion and is on a bottom surface of the welding target; and
a control unit configured to detect a welding defect of the welding target based on the first temperature measured by the first temperature measurement unit.

2. The welding apparatus of claim 1, wherein the control unit comprises:
an input part configured to acquire the first temperature measured by the first temperature measurement unit;
a storage part configured to store a reference temperature range for normal welding based on a correlation between temperatures and penetration depths;
a comparison part configured to check whether the first temperature acquired by the input part is within the reference temperature range; and
a determination part configured to determine whether a welding defect is present in the welding target based on a result of comparison by the comparison part.

3. The welding apparatus of claim 2, wherein, when the comparison part checks that the first temperature is lower than a lower limit of the reference temperature range, the determination part determines a welding state of the welding target as a weak welding state.

4. The welding apparatus of claim 2, wherein the correlation between the temperatures and the penetration depths is determined by a deep learning algorithm generated by machine learning.

5. The welding apparatus of claim 1, wherein the seating unit is fixedly arranged, and
the laser welding unit and the first temperature measurement unit move horizontally along a preset welding path.

6. The welding apparatus of claim 1, wherein the laser welding unit and the first temperature measurement unit are fixedly arranged, and
the seating unit moves horizontally along a preset welding path.

7. The welding apparatus of claim 1, wherein a plurality of first temperature measurement units are arranged along the welding path, and the seating unit and the first temperature measurement unit are fixedly arranged, and
the laser welding unit moves horizontally along a preset welding path.
